# EUROPÄISCHE PATENTANMELDUNG

(11) **EP 1 972 431 A2**
(43) Veröffentlichungstag der Anmeldung: **24.09.2008**
(21) Anmeldenummer: 08005079.2
(22) Anmeldetag: 19.03.2008
(51) Int. Cl.: B30B 11/18, F16C 23/02, F16C 23/06, B30B 3/04

(54) **Kompaktiermaschine und Verfahren zur kontinuierlichen Regelung der Walzenparallelität in Kompaktiermaschinen**

(30) Priorität: 23.03.2007 DE 102007014743
(71) Anmelder: Wiegand, Stefan, 58135 Hagen (DE)
(72) Erfinder: Wiegand, Stefan, 58135 Hagen (DE)
(74) Vertreter: Kötter, Ulrich

(57) **Zusammenfassung**

Die Erfindung betrifft ein Verfahren zur Regelung der Walzenparallelität in Kompaktiermaschinen beim Verdichten von Produkten, welche zwischen wenigstens zwei gegenläufig rotierende Walzen geführt werden, umfassend nachfolgende Schritte: Messung der durch die Verdichtung des Produkts auf die Walzen (11, 12) einwirkenden Kraft sowie der zu diesem Zeitpunkt anliegenden Lage der in ihrer Position verschiebbaren Welle (6); Ermittlung der theoretischen Biegelinie (20) der die Walzen (11, 12) antreibenden Wellen (5, 6); Ermittlung des Anstellwinkels der Walzen (11, 12) zueinander auf Basis der theoretische Biegelinie (20) der Welle (6); Verschwenkung der in ihrer Position verschiebbaren Welle (6) um den ermittelten Winkel, so dass eine parallele Stellung der Walzen (11, 12) zueinander erzielt ist.

Die Erfindung betrifft weiterhin eine Kompaktiermaschine, umfassend wenigstens zwei über fliegend gelagerte Wellen gegenläufig angetriebenen Walzen, wobei die Wellen in voneinander getrennten Lagersteinen gelagert sind. Einer der Lagersteine ist ortsfest und der andere Lagerstein verschiebbar und über einen hydraulischen Arbeitszylinder in Richtung des ortsfesten Lagersteins mit Druck beaufschlagbar. Der verschiebbare Lagerstein (4) ist an seinem den Walzen (11, 12) gegenüberliegenden Wellenende schwenkbar gelagert ausgebildet und über zumindest zwei als hydraulische Achsen (13, 14) ausgebildete Arbeitszylinder in seiner vertikalen Lage veränderbar. An dem verschiebbaren Lagerstein (4) sind wenigstens zwei Wegmesssysteme sowie mindestens zwei Kraftsensoren angeordnet, über welche die auf den Lagerstein (4) einwirkende Kraft sowie die Position des Lagersteins (4) ermittelbar sind.

## Beschreibung

Die Erfindung betrifft ein Verfahren zur Regelung der Walzenparallelität in Kompaktiermaschinen nach dem Oberbegriff des Patentanspruchs 1. Die Erfindung betrifft weiterhin eine Kompaktiermaschine nach dem Oberbegriff des Patentanspruchs 5.

Kompaktiermaschinen werden beispielsweise in der chemischen oder in der pharmazeutischen Industrie eingesetzt und verfügen in bekannter Weise über zwei gegenläufig angetriebene Walzen, zwischen denen pulverförmige Stoffe bzw. Produkte verdichtet werden, um sie dann anschließend in einem weiteren Verfahrensschritt in vorgegebene Korngrößen zu brechen. Für die mit Kompaktiermaschinen erreichbare Produktqualität ist dabei die Parallelität der Walzen von entscheidender Bedeutung.

Bei Kompaktiermaschinen großer Leistung, die in der chemischen Industrie für die industrielle Verarbeitung großer Produktmengen eingesetzt werden, werden die Wellen der Walzen wegen der beim Kompaktieren auftretenden hohen Belastungen in der Regel nicht fliegend gelagert, so dass sich eine parallele Stellung der Walzen ohne wesentlichen konstruktiven Mehraufwand erreichen lässt.

Kompaktiermaschinen mit Walzen, die über fliegend gelagerte Wellen angetrieben werden und bei denen schon durch das Konstruktionsprinzip eine räumliche Trennung der Prozesstechnik vom übrigen Teil der Maschine gegeben ist, sind leicht zu reinigen und auch für den Einsatz im Reinraum und für die Verarbeitung toxischer Produkte geeignet. Diese Maschinen finden deshalb hauptsächlich in der Pharmazie Verwendung.

Üblicherweise werden bei Kompaktiermaschinen die zwischen den Walzen für die Kompaktierung benötigten hohen Presskräfte durch Hydraulikzylinder erzeugt. Während die Welle einer Walze ortsfest gelagert ist, lässt sich die Welle der gegenüberliegenden anderen Walze dieser Maschine über Linearführungen verschieben, so dass produktabhängig oder in Abhängigkeit der den Walzen zugeführten Produktmengen unterschiedliche Abstände der Walzen zueinander realisierbar sind.

Nachteilig beim Antrieb der Walzen über fliegend gelagerte Wellen ist der Umstand, dass sich die die Walzen tragenden freien Wellenenden durch die zwischen den Walzen vorhandene hohe Presskraft geringfügig verbiegen, wodurch die Walzen gegeneinander verwinkelt angestellt werden und sich so kein paralleler Spalt zwischen den Walzen einstellt.

Um diesen Nachteil auszugleichen ist es bekannt, konische Walzen einzusetzen. Nachteilig hierbei ist jedoch, dass der Konuswinkel der Walzen dabei lediglich für einen konkreten, von der Presskraft abhängigen Betriebspunkt ausgelegt werden kann und dass bei Abweichungen von diesen konstruktiv vorgegebenen Bedingungen, die sich in der Praxis schon bei der Verarbeitung anderer Produkte einstellen können, wiederum kein paralleler Spalt zwischen den Walzen vorhanden ist.

Hier will die Erfindung Abhilfe schaffen. Der Erfindung liegt die Aufgabe zu Grunde, ein Verfahren zu schaffen, welches auch bei unterschiedlichen zu kompaktierenden Produkten die parallele Stellung der Walzen zueinander (Walzenparallelität) beim Kompaktierungsprozess gewährleistet. Gemäß der Erfindung wird diese Aufgabe durch die Merkmale des kennzeichnenden Teils des Patentanspruchs 1 gelöst.

Mit der Erfindung ist ein Verfahren geschaffen, welches auch bei unterschiedlichen zu kompaktierenden Produkten die parallele Stellung der Walzen zueinander (Walzenparallelität) beim Kompaktierungsprozess gewährleistet

In Weiterbildung der Erfindung erfolgt die Messung der auf die Walzen einwirkenden Kraft sowie der entsprechenden Lage der in ihrer Position verschiebbaren Welle im Bereich der Walzen und die Verschwenkung der in ihrer Position verschiebbaren Welle über eine Lageänderung des antriebsseitigen Endes der Welle. Hierdurch ist eine zuverlässige Lageanpassung der Wellen zueinander und somit eine genaue Einstellung des Walzenspaltes ermöglicht.

In Ausgestaltung der Erfindung erfolgt die Messung der auf die Walzen einwirkenden Kraft sowie der Lage der in ihrer Position verschiebbaren Welle an genau zwei Stellen der Welle. Hierdurch ist eine hinreichend genaue Ermittlung der theoretischen Biegelinie der Welle bei geringem konstruktiven Aufwand ermöglicht.

Vorteilhaft erfolgt eine kontinuierliche Regelung der Walzenparalletität, wobei die parallele Stellung der Walzen zueinander durch eine permanente Messung der auf die Walzen einwirkenden Kraft sowie eine permanente Messung der Lage der in ihrer Position verschiebbaren Welle überwacht wird und jeweils bei einer auftretenden Veränderung der auf die Walzen einwirkenden Kraft der Schwenkwinkel der in ihrer Position verschiebbaren Welle bis zum Erreichen der parallelen Stellung der Walzen korrigiert wird. Hierdurch ist ein kontinuierlicher Spalt zwischen den Walzen während des Kompaktierungsprozesses erzielt.

Die bei der Verdichtung des Produktes auf die Walzen einwirkende Kraft und die sich daraus ergebende Lage der in ihrer Position verschiebbaren Welle werden an zwei Stellen dieser Welle gemessen. Die parallele Stellung der Walzen zueinander wird durch eine permanente Messung der auf die Walzen einwirkenden Kraft und durch eine Messung der Lage der in ihrer Position verschiebbaren Welle überwacht. Bei einer auftretenden Veränderung der auf die Walzen einwirkenden Kraft wird der Schwenkwinkel der in ihrer Position verschiebbaren Welle bis zum Erreichen einer erneuten parallelen Stellung der Walzen korrigiert.

Der Erfindung liegt weiterhin die Aufgabe zu Grunde, eine Kompaktiermaschine zu schaffen, bei der auch bei unterschiedlichen zu kompaktierenden Produkten die parallele Stellung der Walzen zueinander (Walzenparallelität) beim Kompaktierungsprozess gewährleistet ist. Gemäß der Erfindung wird diese Aufgabe durch die Merkmale des kennzeichnenden Teils des Patentanspruchs 5 gelöst.

Mit der Erfindung ist eine Kompaktiermaschine geschaffen, bei der auch bei unterschiedlichen zu kompaktierenden Produkten die parallele Stellung der Walzen zueinander (Walzenparallelität) beim Kompaktierungsprozess gewährleistet ist.

In Weiterbildung der Erfindung ist der verschiebbare Lagerstein beidseitig zwischen jeweils zwei diametral zueinander angeordneten hydraulischen Achsen gelagert. Hierdurch ist eine gleichmäßige Beeinflussung des Lagersteins ermöglicht.

In Ausgestaltung der Erfindung erfolgt die Lagerung des verschiebbaren Lagersteins an seinem den Walzen zugewandten Ende zwischen den hydraulischen Achsen über ein Schwenklager. Hierdurch ist eine direkte Korrektur des Anstellwinkels der Walzen zueinander ermöglicht.

In weiterer Ausgestaltung der Erfindung erfolgt die Lagerung des verschiebbaren Lagersteins an seinem den Walzen abgewandten Ende zwischen den hydraulischen Achsen über ein in Längsrichtung der Welle ein Spiel aufweisendes Lager. Hierdurch ist ein Verkanten der Welle im Zuge einer Lagekorrektur vermieden.

Vorteilhaft sind die den in seiner Lage verschiebbaren Lagerstein tragenden Achsen der hydraulischen Achsen im ortsfest montierten Lagerstein gelagert. Hierdurch ist eine gute Fixierung der hydraulischen Achse bewirkt.

Bevorzugt ist ein Rechnermodul zur Berechnung der Biegelinie vorgesehen, welches mit einer Steuerungseinheit verbunden ist, durch welche die hydraulischen Achsen manipulierbar sind. Hierdurch ist eine direkte Regelung des Walzenspaltes in Echtzeit ermöglicht.

Das Rechnermodul ist bevorzugt in der Maschinensteuerung integriert, wo ein Programm zur Berechnung der Wellendurchbiegung hinterlegt ist. Aus den durch die Messsensoren gelieferten Lage- und Kraftdaten wird die daraus resultierende Winkelstellung der fliegend gelagerten, die Walzen tragenden Wellenenden berechnet. Die Maschinensteuerung kann hierauf basierend unmittelbar durch Ansteuerung der hydraulischen Achsen eine Lagekorrektur der Welle vornehmen, wodurch die Walzenparallelität wieder hergestellt wird.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben.

Es zeigen:

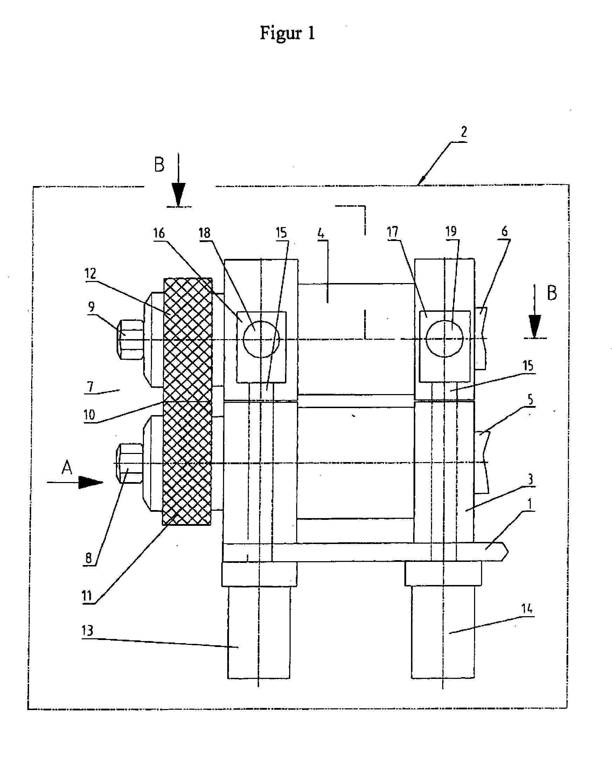

Fig. 1 die Seitenansicht eines Walzwerkes einer Kompaktiermaschine (ohne Produkt);

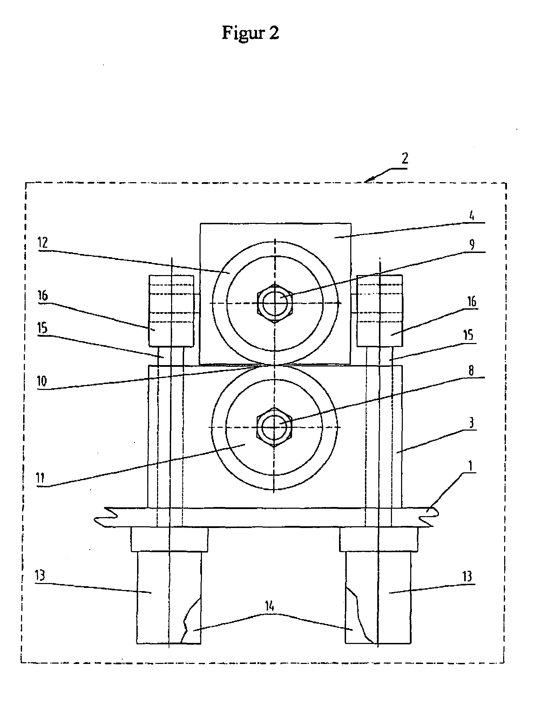

Fig. 2 das Walzenwerk aus Fig. 1 in der Ansicht (A) von vorne;

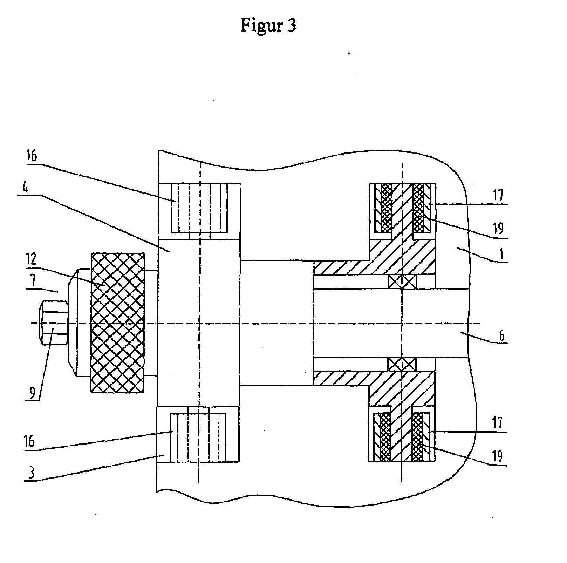

Fig. 3 das Walzenwerk aus Fig. 1 im Schnitt B-B;

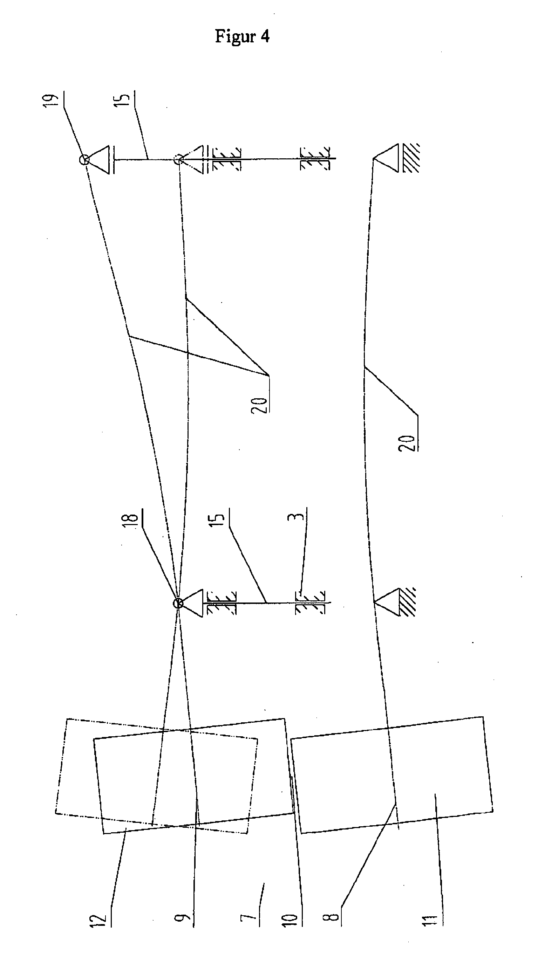

Fig. 4 die schematische Darstellung des Biegelinienverlaufs der Wellen- und Walzengeometrie eines Walzenwerkes bei Einbringen eines Produkts beim Kompaktieren.

Die als Ausführungsbeispiel gewählte Kompaktiermaschine - die in den Figuren lediglich ausschnittsweise dargestellt ist - weist ein auf ihrer Kopfplatte 1 angeordnetes Walzenwerk 2 auf, das einen auf der Kopfplatte 1 ortsfest montierten Lagerstein 3 und einen darüber angeordneten und in seiner Lage veränderbaren Lagerstein 4 umfasst. In jedem Lagerstein 3, 4 ist jeweils eine, über einen nicht dargestellten Antrieb gegenläufig angetriebene Welle 5, 6 gelagert. Die Wellen 5, 6 treten zur Bedienseite 7 der Kompaktiermaschine aus dem jeweiligen Lagerstein 3, 4 aus und tragen an ihren freien, fliegend gelagerten Wellenenden 8, 9 zueinander einen Abstand 10 aufweisende Walzen 11, 12.

Unteralb der Kopfplatte 1 sind hydraulische Achsen 13, 14 vorgesehen, deren Achsen 15 im ortfest montierten Lagerstein 3 verschiebbar gelagert und über Aufnahmen 16, 17 mit dem in seiner Lage veränderbaren Lagerstein 4 verbunden sind. Während die Aufnahmen 16 der im Bereich der Walzen 11, 12 vorhandenen hydraulischen Achsen 13 über Schwenklager 18 verfügen, sind die am anderen Ende mit dem in seiner Lage veränderbaren Lagerstein 4 verbundenen hydraulischen Achsen 14 über ein in Längsrichtung der Wellen 5, 6 ein Lagerspiel aufweisende Lager 19 mit dem Lagerstein 4 gekoppelt.

In bekannter Weise ist in jeder hydraulischen Achse 13, 14 ein nicht dargestelltes Wegmeßsystem und ein nicht dargestellter Kraftmesssensor integriert, die elektrisch mit der Maschinensteuerung gekoppelt sind. Außerdem verfügt die Maschinensteuerung über ein Programm zur Berechnung der Wellendurchbiegung, mit dessen Hilfe der sich an den freien, fliegend gelagerten Wellenenden 8, 9 aus der Durchbiegung der Wellen 5, 6 resultierende Winkel und damit die Abweichung der Walzen 11, 12 aus ihrer parallelen Stellung in Abhängigkeit von den auf die Walzen 11, 12 einwirkenden, sie auseinanderdrängenden Kräfte bestimmen lässt.

Im Ausgangszustand ohne Produkt weisen die Walzen 11, 12 zueinander einen geringen Abstand 10 auf. Die hydraulischen Achsen 13, 14 sind über ein nicht dargestelltes Hydraulikaggregat mit einem auf das jeweilig zu verdichtende Produkt abgestimmten Druck beaufschlagt und fixieren den in seiner Lage veränderbaren Lagerstein 4 in dieser konstruktiv vorgegebenen Position.

Um Produkte erfolgreich verdichten zu können, sind in der Regel große Kräfte notwendig. Wegen der fliegenden Lagerung der Wellenenden 8, 9 kommt es kraftabhängig auch zu einer Verbiegung der Wellen 5, 6 und damit zwangsweise zu einer Veränderung des Winkels der fliegend gelagerten Wellenenden 8, 9 und somit auch zu einer unerwünschten Abweichung der Walzen 11, 12 aus ihrer parallelen Stellung zueinander.

Das zu verdichtende Produkt wird über eine nicht dargestellte Einspeisung zugeführt, gelangt zwischen die Walzen 11, 12 und drängt diese auseinander. Dadurch wird der in seiner Lage veränderbare Lagerstein 4 gegen die Kraft der hydraulischen Achsen 13 angehoben, bis sich ein Kräftegleichgewicht einstellt. Dabei wird die tatsächliche Größe der über das Produkt in die Walzen 11, 12 eingeleiteten Kraft durch den in den hydraulischen Achsen 13 integrierten Kraftsensor und der an der Stelle der hydraulischen Achsen 13 zurückgelegte Weg des in seiner Lage veränderbaren Lagersteins 4 durch die in den hydraulischen Achsen 13 integrierten Wegmeßsysteme gemessen. Mit dem gemessenen Wert der Kraft werden über das in der Steuerung hinterlegte Programm die Biegelinien 20 der Wellen 5, 6 errechnet und daraus die sich unter diesen Bedingungen ergebende Winkelabweichung der Walzen 11, 12 ermittelt.

Um wiederum die erwünschte parallele Stellung der Walzen 11, 12 zueinander zu erreichen, werden nun auf Basis des durch das integrierte Wegsystem der hydraulischen Achsen 13 ermittelten Weges die hydraulischen Achsen 14 druckbeaufschlagt und heben den in seiner Lage veränderbaren Lagerstein 4 an, bis wiederum eine parallele Stellung der Walzen 11, 12 zueinander erreicht ist. Dabei schwenkt der in seiner Lage veränderbare Lagerstein 4 über das Schwenklager 18 der hydraulischen Achsen 13.

Die über die Walzen 11, 12 in die hydraulischen Achsen 13 eingeleitete Kraft wird permanent gemessen und bei einer Veränderung der auf das System einwirkenden Kräfte, wie sie beispielsweise durch eine verringerte Produktzuführung gegeben sind, der Abstand 10 der Walzen 11, 12 zueinander verringert, bis wiederum eine als Parameter vorgegebene Größe der Kraft erreicht wird. In diesem Fall müssen die hydraulischen Achsen 14 eingefahren werden, um eine parallele Stellung der Walzen 11, 12 bei dann verringertem Abstand 10 der Walzen 11, 12 zueinander zu erreichen.

Zum besseren Verständnis wurde im Ausführungsbeispiel die zeitliche Reihenfolge der Verfahrensschritte zur Einstellung der Parallelität der Walzen 11, 12 so dargestellt, als ob die Verstellung des in seiner Lage veränderbaren Lagersteins 4 im Bereich der Walzen 11, 12 abgeschlossen sein müsste, bevor der in seiner Lage veränderbare Lagerstein 4 über die hydraulischen Achsen 14 verschwenkt wird. In der Praxis ist das nicht der Fall. Die Verstellung der hydraulischen Achsen 14 kann natürlich erst erfolgen, wenn über die in den hydraulischen Achsen 13 integrierten Kraftsensoren und Wegmeßsysteme Messergebnisse vorliegen und insofern erfolgen beide Verfahrensschritte tatsächlich in zeitlicher Reihenfolge nacheinander. Sobald jedoch die hydraulischen Achsen 13 einen geänderten Wert für die Kraft und den Weg messen, werden die hydraulischen Achsen 14 unmittelbar nachgestellt, so dass für einen Betrachter der zeitlichen Abläufe der einzelnen Verfahrensschritte der Eindruck entsteht, dass beide Bewegungen permanent gleichzeitig erfolgen.

## Patentansprüche

1. Verfahren zur Regelung der Walzenparallelität in Kompaktiermaschinen beim Verdichten von Produkten, welche zwischen wenigstens zwei gegenläufig rotierende Walzen geführt werden, wobei die wenigstens zwei Walzen über fliegend gelagerte Wellenenden angetrieben werden und wobei wenigstens eine der Wellen relativ zu wenigstens einer gegenüberliegend angeordneten Welle verschiebbar und druckbeaufschlagbar ausgebildet ist, **gekennzeichnet durch** nachfolgende Schritte:
- Messung der **durch** die Verdichtung des Produkts auf die Walzen (11, 12) einwirkenden Kraft sowie der zu diesem Zeitpunkt anliegenden Lage der in ihrer Position verschiebbaren Welle (6),
- Ermittlung der theoretischen Biegelinie (20) der die Walzen (11, 12) antreibenden Wellen (5, 6),
- Ermittlung des Anstellwinkels der Walzen (11, 12) zueinander auf Basis der theoretische Biegelinie (20) der Welle (6),
- Verschwenkung der in ihrer Position verschiebbaren Welle (6) um den ermittelten Winkel, so dass eine parallele Stellung der Walzen (11, 12) zueinander erzielt ist.

2. Verfahren nach Anspruch 1, **dadurch gekennzeichnet, dass** die Messung der auf die Walzen (11, 12) einwirkenden Kraft sowie der entsprechenden Lage der in ihrer Position verschiebbaren Welle (6) im Bereich der Walzen (11, 12) erfolgt und dass die Verschwenkung der in ihrer Position verschiebbaren Welle (6) über eine Lageänderung des antriebsseitigen Endes der Welle (6) erfolgt.

3. Verfahren nach einem der Ansprüche 1 und 2, **dadurch gekennzeichnet, dass** die Messung der auf die Walzen (11, 12) einwirkenden Kraft sowie der Lage der in ihrer Position verschiebbaren Welle (6) an genau zwei Stellen der Welle (6) erfolgt.

4. Verfahren nach einem der vorgenannten Ansprüche, **dadurch gekennzeichnet, dass** eine kontinuierliche Regelung der Walzenparalletität erfolgt, wobei die parallele Stellung der Walzen (11, 12) zueinander durch eine permanente Messung der auf die Walzen (11, 12) einwirkenden Kraft (F) sowie eine permanente Messung der Lage der in ihrer Position verschiebbaren Welle (6) überwacht wird und jeweils bei einer auftretenden Veränderung der auf die Walzen (11, 12) einwirkenden Kraft der Schwenkwinkel der in ihrer Position verschiebbaren Welle (6) bis zum Erreichen der parallelen Stellung der Walzen (11, 12) korrigiert wird.

5. Kompaktiermaschine, umfassend wenigstens zwei über fliegend gelagerte Wellen gegenläufig angetriebenen Walzen, zwischen denen ein Produkt verdichtbar ist, wobei die Wellen in voneinander getrennten Lagersteinen gelagert sind und einer der Lagersteine ortsfest und der andere Lagerstein verschiebbar und über einen hydraulischen Arbeitszylinder in Richtung des ortsfesten Lagersteins mit Druck beaufschlagbar ist, **dadurch gekennzeichnet, dass** der verschiebbare Lagerstein (4) an seinem den Walzen (11, 12) gegenüberliegenden Wellenende schwenkbar gelagert ausgebildet ist und über zumindest zwei als hydraulische Achsen (13, 14) ausgebildete Arbeitszylinder in seiner vertikalen Lage veränderbar ist und dass an dem verschiebbaren Lagerstein (4) wenigstens zwei Wegmesssysteme sowie mindestens zwei Kraftsensoren angeordnet sind, über welche die auf den Lagerstein (4) einwirkende Kraft sowie die Position des Lagersteins (4) ermittelbar sind.

6. Kompaktiermaschine nach Anspruch 5, **dadurch gekennzeichnet, dass** der verschiebbare Lagerstein beidseitig zwischen jeweils zwei diametral zueinander angeordneten hydraulischen Achsen (13, 14) gelagert ist.

7. Kompaktiermaschine nach Anspruch 6, **dadurch gekennzeichnet, dass** die Lagerung des verschiebbaren Lagersteins (4) an seinem den Walzen (11, 12) zugewandten Ende zwischen den hydraulischen Achsen (13) über ein Schwenklager (18) erfolgt.

8. Kompaktiermaschine nach einem der Ansprüche 6 und 7, **dadurch gekennzeichnet, dass** die Lagerung des verschiebbaren Lagersteins (4) an seinem den Walzen (11, 12) abgewandten Ende zwischen den hydraulischen Achsen (14) über ein in Längsrichtung der Welle (6) ein Spiel aufweisendes Lager (19) erfolgt.

9. Kompaktiermaschine nach einem der Ansprüche 5 bis 8, **dadurch gekennzeichnet, dass** die den in seiner Lage verschiebbaren Lagerstein (4) tragenden Achsen (15) der hydraulischen Achsen (13, 14) im ortsfest montierten Lagerstein (3) gelagert sind.

10. Kompaktiermaschine nach einem der Ansprüche 5 bis 9, **dadurch gekennzeichnet, dass** ein Rechnermodul zur Berechnung der Biegelinie vorgesehen ist, welches mit einer Steuerungseinheit verbunden ist, durch welche die hydraulischen Achsen (13, 14) manipulierbar sind.
